# EUROPEAN PATENT SPECIFICATION

(11) **EP 2 714 283 B1**
(45) Date of publication and mention of the grant of the patent: **28.10.2015**
(21) Application number: 12735629.3
(22) Date of filing: 01.06.2012
(51) Int. Cl.: B05B 13/02, B05B 5/08

(54) **SUSPENSION DEVICE**
AUFHÄNGUNGSVORRICHTUNG
DISPOSITIF DE SUSPENSION

(30) Priority: 02.06.2011 GB 201109253; 02.06.2011 US 201161492566 P
(43) Date of publication of application: 09.04.2014
(73) Proprietor: Illinois Tool Works Inc., Glenview, IL 60025 (US)
(72) Inventor: DANDOY, Jacques, B-1070 Anderlecht (BE)
(74) Representative: Finnie, Peter John
(86) International application number: PCT/IB2012/052786
(87) International publication number: WO 2012/164543

(56) References cited:
- US-A- 4 867 099
- US-A1- 2003 170 399

## Description

The present invention relates to a hanging system for articles in all kinds of shapes where conductivity is required between the item being suspended and a mount upon which the item is suspended or a separate conductor. The system can find particular use in powder coat processes. In particular, the present invention relates to a suspension device which may have a multi-layered structure and which may be suitable for use in a powder coating process.

Technology for coating products with dry powder rather than conventional liquids has been available since the 1950's. The powder used for the process is generally a mixture of finely ground particles of pigment and polymeric resin. The powder is either sprayed electro-statically onto a surface to be coated, or the substrate is dipped into a fluidized bed of suspended powder. In the fluidized bed process, the powders generally adhere to a preheated substrate surface. Alternatively, they adhere electro-statically in a spray process. When heated further in a curing oven, the particles flow and fuse into a strong, adhering coating. The result is a high quality coating with an attractive finish and excellent durability.

At present, hanging systems for electro-statically coating are all provided with metallic clamps or metal hooks, since the hanging system should maintain conductivity between the item to be coated and a ground or other electrical source. This is needed as there is an electrostatic field which requires conductivity for the process to work efficiently. Further, the hanging system may need to resist curing processes where the product and hanging device are exposed to temperatures in the range of around 130 degrees centigrade to 160 degrees centigrade.

United States Patent application US 2003/01703799 A1 describes a method and apparatus for coating articles with a coating material.

United States Patent 4867099 describes an apparatus for electrostatic spray coating of plate-like substrates.

According to the present invention there is provided a suspension device for simultaneously suspending an item and providing a conductive path away from the product, comprising:
an adhesive portion for adhering to the item to be coated;
an attachment portion for attaching to a mount on which the suspension device is mounted; and
a conductive portion arranged to form an electrical path, from the item to be coated to a conductor, wherein the conductive portion is a conductive layer, and wherein the adhesive portion comprises an adhesive layer and wherein the conductive layer is disposed on a first part of the adhesive layer, such that when a second part of the adhesive layer is adhered to a surface, the conductive layer is in contact with the surface.

A method of electro-statically powder-coating an electrically conductive product is further provided, comprising the steps of:
adhering a suspension device of the invention to an electrically conductive product;
electro-statically applying a powder-coat to the product; and
removing the attachment portion, leaving at least the adhesive portion adhered to the electrically product.

The method is efficient in terms of the low number of operator steps required and results in a product requiring no re-work to cover portions which are left un-coated by known suspension means.

Accordingly, the product may be coated in its entirety, by a combination of the powder coating and the part of the suspension device which is not removed.

The attachment portion may comprise at least a part of the conductive portion. This provides a single point of contact for both the mechanical and electrical connection of the suspension device.

The adhesive portion may comprise at least a part of the conductive portion. This allows the point of adherence of the suspension device to the product to be the same as the point of electrical contact needed for the electro-static process.

The adhesive portion may comprise a pressure-sensitive adhesive. The adhesive may be any one or a mixture of acrylic based, rubber based or silicone based adhesives. This allows easy application of the device to a product, reducing the time required to be spent preparing the device for coating.

The suspension device may be a multi-layer product. Multi-layer products can be fast and cheap to manufacture as compared to known devices which require heavy duty metalwork and/or forming of metalwork or welding to the product.

According to the invention the conductive portion is a conductive layer. The provision of a conductive layer allows economical use of a conductive material to provide the electrical path through the suspension device.The adhesive portion comprises an adhesive layer. Use of an adhesive layer avoids the need for welding or clamping means to attach the known suspension devices. The adhesive portion may comprise a conductive adhesive, such that a single portion or layer can provide the dual function of adhering to the product and providing a conductive path.

A support layer may be provided to give additional strength and support to the conductive and/or adhesive layers.

The support layer may extend between the adhesive portion and the attachment portion to provide a link between the adhesive portion and the attachment portion.

According to the invention the conductive layer is disposed on the adhesive layer. This allows the suspension device to be put in place on the product in a single operation which attaches both the conductive layer and the adhesive layer and optionally the attachment portion in a single operation, reducing operator time and effort.

The conductive layer may be disposed on a first part of the adhesive layer, such that when a second part of the adhesive layer is adhered to a surface, the conductive layer is in contact with the surface. This ensures that a conductive path is in place as soon as the device is attached and this improves safety and reduces effort for the operator as no separate step is required to attach the conductive portion

The conductive layer may extend from the adhesive portion to the attachment portion. The resulting device provides a single body which attaches at a first region to the product to be coated and at a second region to a mount, which provides both mechanical support and a electrical path.

The present invention will now be described in relation to the following figures in which:
Figure 1 shows a prior art suspension arrangement;
Figure 2 shows a suspension device according to the present invention;
Figure 3 shows a multilayer device according to the present invention;
Figure 4 shows a multilayer device according to the present invention;
Figure 5 shows a multilayer device according to the present invention;
Figure 6 shows a multilayer device according to the present invention prior to application to a product to be coated;
Figure 7 shows a device according to the present invention in use for suspending an item being coated; and
Figure 8 shows a product after removal of the attachment portion of the present invention.

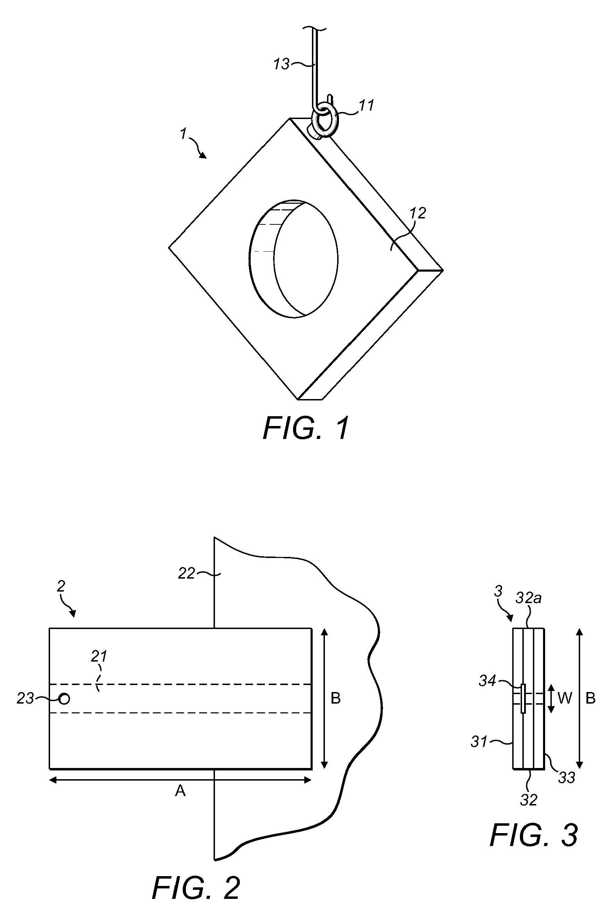

Figure 1 shows a prior art suspension arrangement 1, in which an eyelet 11 has been welded to the product 12 to provide suspension means while the product 12 is being coated. Product 12 may have any form and may be planar, be formed from two intersecting substantially planar sections or may have any other 3D form. The eyelet allows the product to be suspended on a mount such as a metal hook 13. The eyelet 11 and the metal hook 13 provide mechanical support to the product, as well as an electrical path, such that electro-static coating is possible without the product having to be supported anywhere other than via the eyelet 13. Therefore all exposed faces of the product can be coated in a single operation.

The drawback of this system is that eyelet 11 may not be a useful part of the final product and therefore may need to be removed once the coating operation is complete. This leaves an area of exposed metal which must be recoated. Eyelet 11 may be replaced by a hole drilled in the product 12. However, in the case of a drilled hole, and even in the case that the eyelet is an integral and useful part of the final product, the contact area between mount 13 and eyelet 11 or the drilled hole leaves an uncoated area which must be coated in a second coating operation.

Figure 2 shows an example of a suspension device 2 of the present invention. The device 2 has a substantially planar form and comprises an adhesive portion on one face and a conductive portion 21 arranged to contact the product to be coated 22 when the adhesive portion is adhered to it, such that it forms an electrical path from the product to be coated to a location remote from the product. The device has a first dimension A and a second dimension B defining its size and these dimensions may be adjusted depending upon the weight of the product being suspended and the strength of adhesive used. In practice, the suspension device may have any shape and the contact area between the suspension device and the product may be configured to provide sufficient support via the adhesive portion. A hole 23 may be provided in an attachment portion for connecting the suspension device to a mount such as a hook. Where the mount is conductive, the attachment portion illustrated can provide both mechanical support and an electrically conductive path between the mount and the product 22.

Figure 3 shows an example of a multi-layer device according to the present invention. The device may have a substantially planar form as shown in Figure 2 and be comprised of layers as shown in Figure 3. Layer 31 is a protective layer covering an adhesive layer 32a disposed between layer 31 and layer 32. Layer 31 is removed before placing the adhesive layer 32a on the product to be coated. Layer 32 may be a support layer made from a material of sufficient strength to hold the product to be coated. Such a material may be acrylic foam tape, but other pressure sensitive tapes with specific carriers such as filmic or foam may be useful. An acrylic foam tape has been found to be suitable. Any other material with the required strength may be used in its place.

Layer 33 may be a clear polyester film and may have a thickness of 250 microns. Alternatively, 2 layers of PET tape may be used in place of layer 33. The function of this layer 33 is to give the product a certain stiffness and it is advantageous to provide this layer to provide sufficient resistance to the forces created when suspending or hanging the product with the suspension device.

This layer could also be made from any other material such as other plastics or metals, including stainless steel, or any other metallic or conductive material. In this case the conductive portion may be comprised in layer 3, although a conductive path through layer 32 may be necessary in this, case to provide the necessary conductive path from the product.

The conductive path may be provided by a conductive strip 34 disposed on the adhesive layer 32a between layers 31 and 32. When the adhesive layer 32a is placed on the product to be coated, the conductive portion in the form of strip 34 is in contact with the product.

A device dimension B of 50mm with a strip width W of 9mm has been found to be useful, but any dimensions suited to the product being coated may be provided. Any form of the suspension device 2 may be used as dictated by the form of the product to be coated.

The conductive element may be made from any conductive material such as conductive acrylic foams. Where layer 32 is made from conductive acrylic foam, a separate conductive element may not be necessary. This can provide a support layer 32 which is also a conductive layer. A conductive path through the adhesive on the conductive support layer can be provided by mixing conductive particles with the adhesive.

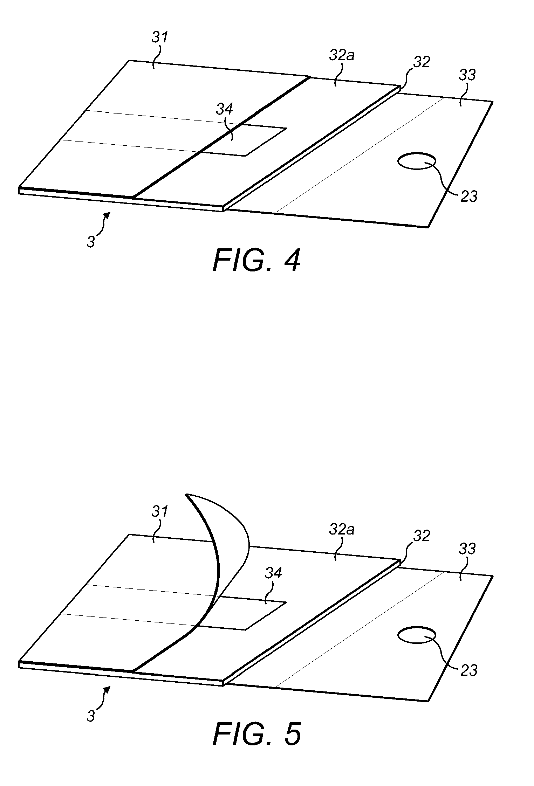

Figures 4 and 5 illustrate the multi-layer suspension device 3 of the present invention. To illustrate its construction, the device is shown with portions of each layer removed in the figure. Accordingly it can be seen that layer 33 provides a backing to the support layer 32. The layers 32 and 33 are fixed face to face to provide the required stiffness. Alternatively, a single layer of greater thickness than layers 32 and 33 could be provided to give the required stiffness. Adhesive 32a is disposed on one face of support layer 32. The conductive strip 34 is disposed on the face of adhesive layer 32a such that when the adhesive layer is adhered to the product to be coated, the conductive portion is in contact with the product. A removable protective layer 31 is temporarily placed on the adhesive layer for manufacture and storage of the device before use and the layer 31 is removed as shown in Figure 5 prior to adhering the adhesive layer to the product for suspension and subsequent coating.

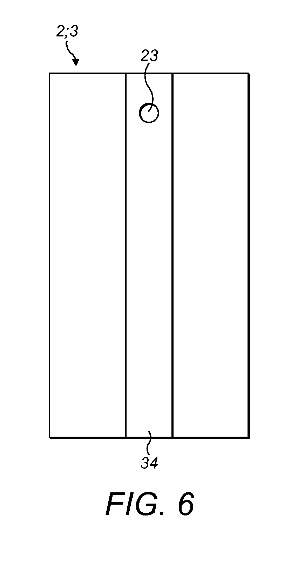

Figure 6 shows suspension device 2 or 3 viewed from the direction of adhesive layer 32a in its complete form, with conductive portion 34 visible. Protective layer 31 of device 3 is removed in this figure. It can be seen that conductive portion 34 surrounds hole 23 such that a mount or hook disposed in hole 23 may form a conductive path with conductive portion 34.

The suspension device of the present invention may easily be cut down if too large, by non-specialist means such as a knife or scissors, making it adaptable enough for application to a number of different types and sizes of product with minimal need for complex adjustments or adaptations prior to application to a product. It can be beneficial to make the device as thin as is possible whilst maintaining the required strength and stiffness so that the device may be easily cut and presents a minimal impact on the appearance and structure of the outer profile of the product.

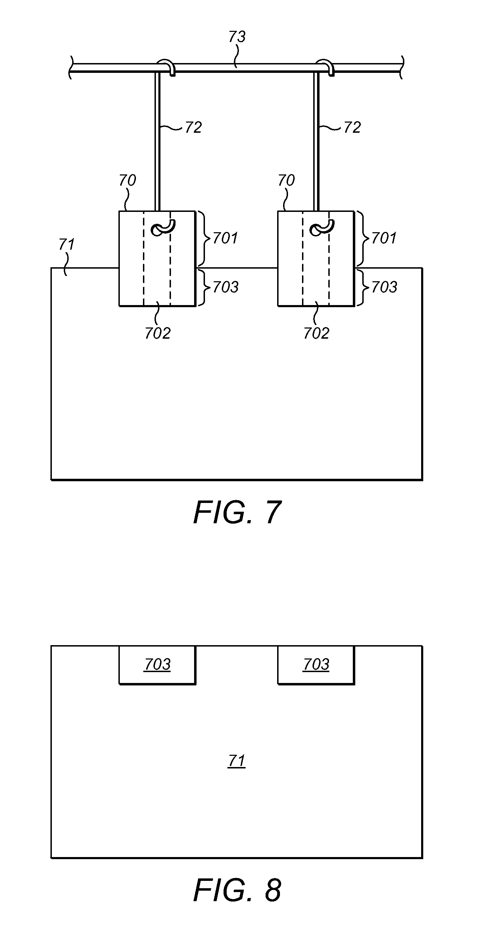

Figure 7 shows a product 71 suspended by a suspension device 70 according to the present invention. Mounts 72, which may be metal hooks, or any other conductive mount, engage with the attachment portion 701 of the suspension device 70. Adhesive portions have been adhered to the product 71 to establish mechanical engagement between the adhesive portions and the product and a conductive path between the product and conductive portions 702. The mounts 72 form a conductive path with the conductive portions 702 such that a conductive path from the product 71 to a conductor 73 is established, while the hooks 72 and suspension devices 70 of the present invention simultaneously provide a mechanical support to the product 71. Accordingly, the product 71 is suitably suspended and provided with a conductive path to the mounts 72 via the suspension devices 70 of the present invention and is ready for electro-static coating. Although two substantially rectanguloid devices 70 of the present invention are illustrated in Figure 7, any number of devices may be used and they may have any form or size as required by the size, form and mass of the product being suspended.

Once suspended as illustrated in Figure 7, the device is electro-statically coated by known methods.

After coating is complete, the hooks 72 of Figure 7 are disengaged from suspension devices 70 and the attachment portions 701 are removed, leaving the adhesive portions of the devices 703 in place on the product. The adhesive portions are shown at an edge of the product, but may be located on any surface of the product. After the process is complete, the product is now covered on its exposed parts by the coating process, while the portions covered by adhesive portions 703 remain covered by the adhesive portions.

To provide a coating by the adhesive portions which will have a life sufficiently long and be resistant to the required temperatures, acrylic adhesives have been found to be suitable, however any adhesive with the required properties may be used, such as acrylic based, rubber based or silicone based adhesives. As can be seen, the device of the present invention and its associated method can provide the following advantages over known devices and methods for electro-statically coating products:
Less preparation work is required work on the product before coating-welding eyelets of hooks or drilling holes is no longer necessary.
Less after-work is required on the finished part, since no re-coating of parts contacted used to suspend the product is required.

The attachment of the suspension device is a simpler task requiring no skilled labour to carry out drilling or welding operations.

Different sized and shaped suspension devices may easily be adapted to the sixes shapes and weights of different products to be coated.

## Claims

1. A suspension device (2) for simultaneously suspending an product (22) and providing a conductive path away from the product, comprising:
an adhesive portion (32a) for adhering to the product (22) to be coated;
an attachment portion (23) for attaching to a mount on which the suspension device (2) is mounted; and
a conductive portion (34) arranged to form an electrical path from the product (22) to be coated to a conductor, wherein the adhesive portion (32a) comprises an adhesive layer, **characterised in that**, the conductive portion (34) is a conductive layer disposed on a first part of the adhesive layer, such that when a second part of the adhesive layer is adhered to a surface, the conductive layer is in contact with the surface.

2. A suspension device (2) according to claim 1, wherein the attachment portion (23) comprises at least a part of the conductive portion (34).

3. A suspension device (2) according to claim 1 or claim 2, wherein the adhesive portion (32a) comprises at least a part of the conductive portion (34).

4. A suspension device (2) according to any preceding claim, wherein the adhesive portion (32a) comprises a pressure-sensitive adhesive.

5. A suspension device (2) according to claim 4, wherein the adhesive is any one of:
acrylic based, rubber based or silicone based adhesives.

6. A suspension device (2) according to any preceding claim, wherein the suspension device (2) is a multi-layer product.

7. A suspension device (2) according to claim 1, wherein a support layer (32) extends between the adhesive portion (32a) and the attachment portion (23).

8. A suspension device (2) according to claim 7, wherein the support layer (32) is the conductive layer.

9. A suspension device (2) according to claim 1, wherein the conductive layer is disposed on the adhesive layer.

10. A suspension device (2) according to claim 1, wherein the conductive layer extends from the adhesive portion (32a) to the attachment portion (23).

11. A method of electro-statically powder-coating an electrically conductive product, comprising the steps of:
adhering a suspension device (2) according to any preceding claim to the electrically conductive product (22);
electro-statically applying a powder-coat to the product (22);
removing the attachment portion (23).

12. The method of claim 11, wherein the method comprises leaving at least the adhesive portion (32a) adhered to the electrically conductive product (22).

13. A method according to claim 11, wherein the product (22) is coated in its entirety, by a combination of the powder coating and a part of the suspension device (2).

## Patentansprüche

1. Aufhängungsvorrichtung (2) zum gleichzeitigen Aufhängen eines Produkts (22) und Bereitstellen einer Leiterbahn weg von dem Produkt, umfassend:
einen Klebeabschnitt (32a) zum Kleben an dem zu beschichtenden Produkt (22); einen Befestigungsabschnitt (23) zum Befestigen an einer Halterung, an der die Aufhängungsvorrichtung (2) montiert ist; und
einen leitenden Abschnitt (34), der zum Bilden einer Leiterbahn von dem zu beschichtenden Produkt (22) zu einem Leiter angeordnet ist,
wobei der Klebeabschnitt (32a) eine Klebeschicht umfasst, **dadurch gekennzeichnet, dass** der leitende Abschnitt (34) eine leitende Schicht ist, die auf einem ersten Teil der Klebeschicht angeordnet ist, sodass, wenn ein zweiter Teil der Klebeschicht an eine Oberfläche geklebt wird, die leitende Schicht mit der Oberfläche in Kontakt ist.

2. Aufhängungsvorrichtung (2) nach Anspruch 1, wobei der Befestigungsabschnitt (23) mindestens einen Teil des leitenden Abschnitts (34) umfasst.

3. Aufhängungsvorrichtung (2) nach Anspruch 1 oder 2, wobei der Klebeabschnitt (32a) mindestens einen Teil des leitenden Abschnitts (34) umfasst.

4. Aufhängungsvorrichtung (2) nach einem der vorhergehenden Ansprüche, wobei der Klebeabschnitt (32a) einen druckempfindlichen Klebstoff umfasst.

5. Aufhängungsvorrichtung (2) nach Anspruch 4, wobei der Klebstoff einer von Folgenden sein kann:
Klebstoff auf Acrylbasis, Kautschukbasis oder Silikonbasis.

6. Aufhängungsvorrichtung (2) nach einem der vorhergehenden Ansprüche, wobei die Aufhängungsvorrichtung (2) ein Mehrschichtprodukt ist.

7. Aufhängungsvorrichtung (2) nach Anspruch 1, wobei sich eine Trägerschicht (32) zwischen dem Klebeabschnitt (32a) und dem Befestigungsabschnitt (23) erstreckt.

8. Aufhängungsvorrichtung (2) nach Anspruch 7, wobei die Trägerschicht (32) die leitende Schicht ist.

9. Aufhängungsvorrichtung (2) nach Anspruch 1, wobei die leitende Schicht in der Klebeschicht angeordnet ist.

10. Aufhängungsvorrichtung (2) nach Anspruch 1, wobei sich die leitende Schicht vom Klebeabschnitt (32a) zum Befestigungsabschnitt (23) erstreckt.

11. Verfahren zur elektrostatischen Pulverbeschichtung eines elektrisch leitenden Produkts, umfassend die Schritte:
Kleben einer Aufhängungsvorrichtung (2) nach einem der vorhergehenden Ansprüche an das elektrisch leitende Produkt (22);
elektrostatisches Aufbringen einer Pulverbeschichtung auf das Produkt (22); Entfernen des Befestigungsabschnitts (23).

12. Verfahren nach Anspruch 11, wobei das Verfahren das Belassen mindestens des Klebeabschnitts (32a) umfasst, der an dem elektrisch leitenden Produkt (22) klebt.

13. Verfahren nach Anspruch 11, wobei das Produkt (22) durch eine Kombination aus Pulverbeschichtung und einem Teil der Aufhängungsvorrichtung (2) vollständig beschichtet ist.

## Revendications

1. Dispositif de suspension (2) destiné à suspendre simultanément un produit (22) et à fournir une piste conductrice à l'écart du produit, comprenant :
une portion adhésive (32a) destinée à adhérer au produit (22) à revêtir ;
une portion de fixation (23) destinée à être attachée à un support sur lequel le dispositif de suspension (2) est monté ; et
une portion conductrice (34) prévue pour former une piste électrique depuis le produit (22) à revêtir jusqu'à un conducteur, la portion adhésive (32a) comprenant une couche adhésive, **caractérisé en ce que** la portion conductrice (34) est une couche conductrice disposée sur une première partie de la couche adhésive de telle sorte que lorsqu'une deuxième partie de la couche adhésive est collée à une surface, la couche conductrice soit en contact avec la surface.

2. Dispositif de suspension (2) selon la revendication 1, dans lequel la portion de fixation (23) comprend au moins une partie de la portion conductrice (34).

3. Dispositif de suspension (2) selon la revendication 1 ou 2, dans lequel la portion adhésive (32a) comprend au moins une partie de la portion conductrice (34).

4. Dispositif de suspension (2) selon l'une quelconque des revendications précédentes, dans lequel la portion adhésive (32a) comprend un adhésif sensible à la pression.

5. Dispositif de suspension (2) selon la revendication 4, dans lequel l'adhésif est l'un quelconque parmi :
des adhésifs à base d'acrylique, à base de caoutchouc ou à base de silicone.

6. Dispositif de suspension (2) selon l'une quelconque des revendications précédentes, dans lequel le dispositif de suspension (2) est un produit multicouche.

7. Dispositif de suspension (2) selon la revendication 1, dans lequel une couche de support (32) s'étend entre la portion adhésive (32a) et la portion de fixation (23).

8. Dispositif de suspension (2) selon la revendication 7, dans lequel la couche de support (32) est la couche conductrice.

9. Dispositif de suspension (2) selon la revendication 1, dans lequel la couche conductrice est disposée sur la couche adhésive.

10. Dispositif de suspension (2) selon la revendication 1, dans lequel la couche conductrice s'étend depuis la portion adhésive (32a) jusqu'à la portion de fixation (23).

11. Procédé de revêtement de poudre électrostatique d'un produit électriquement conducteur, comprenant les étapes suivantes :
faire adhérer un dispositif de suspension (2) selon l'une quelconque des revendications précédentes au produit électriquement conducteur (22) ;
appliquer par voie électrostatique un revêtement de poudre sur le produit (22) ;
enlever la portion de fixation (23).

12. Procédé selon la revendication 11, dans lequel le procédé comprend le fait de laisser au moins la portion adhésive (32a) collée au produit électriquement conducteur (22).

13. Procédé selon la revendication 11, dans lequel le produit (22) est revêtu dans sa totalité, par une combinaison du revêtement de poudre et d'une partie du dispositif de suspension (2).
